# EUROPEAN PATENT APPLICATION

(11) **EP 2 520 871 A1**
(43) Date of publication of application: **07.11.2012**
(21) Application number: 09836105.8
(22) Date of filing: 18.12.2009
(51) Int. Cl.: F24J 2/05, F24J 2/46

(54) **VACUUM-TUBE SOLAR COLLECTOR WITH OVERHEATING PROTECTION BY MEANS OF A ROTATING REFLECTOR**

(71) Applicant: López Ferrero, Adolfo Luis, 28260 Galapagar, Madrid (ES)
(72) Inventor: López Ferrero, Adolfo Luis, 28260 Galapagar, Madrid (ES)
(86) International application number: PCT/ES2009/000582
(87) International publication number: WO 2010/076352

(57) **Abstract**

(EN)The aim is to add a device to vacuum-tube solar collectors so as to prevent overheating thereof. Figure 1 shows an illustration summarizing the invention applied, in this case, to a vacuum-tube collector of the type consisting of a single glass tube (1) with heat pipe (2) centred inside the glass tube (1) and making contact with heat-absorbing fins (6). The invention is characterized in that the part of the inner wall of the glass tube (1) which is hidden from the sun incorporates a curved reflector (3) with a small thickness along the entire length of the glass tube (1), which reflector is secured by means of various rings (4) and is able to rotate while being operated by means of a nitinol or bi-metal torsion spring (5) which is screwed in and makes good thermal contact with the evaporator tube of the heat pipe (2) so that, when the temperature of the evaporator tube of the heat pipe (2) increases beyond a certain value, it causes the nitinol spring to change form, rotate and cause rotation of the reflector (3), protecting the heat-absorbing fins (6) from the solar radiation and preventing overheating of the collector and the solar installation. Rotation is reversed when the temperature of the evaporator tube (2) drops, the collector remaining in the normal heat supply condition. This invention is applicable, with certain modifications, to any type of vacuum-tube solar collector according to the accompanying description. Thus not only is overheating prevented in solar installations, but also the collectors are made more efficient due to the reflection of the radiation heat losses of the fins back towards themselves by means of the reflector.

## Description

### Prior art

The capacity of control the heat energy supplied by a solar collector is very important in a thermal solar installation. If the collector is always supplying heat without the possibility of stopping this heat supply, the cost of the installation increases and the performance and durability of the installation decreases.

A collector that is supplying heat without the possibility of stopping this heat supply has the following disadvantages:
Increase design and installation costs: The design of the installation is more complex and expensive due to the measures to prevent overheating, with additional installations like security valves, over dimensioning of expansion tanks, more resistant welding and so on.
Reduces the performance and lifetime of the installation: In general all thermal solar installations suffer when is subjected to high temperatures. The collectors decrease performance and deteriorate. The antifreeze that is normally added to the water in the installation degrades with high temperatures endangering the whole installation due to the frost unprotected situation.
The impossibility of a proper design of the solar thermal installation for central heating, that needs a large solar absorbing area, which leads to an overheating situation in summer.
Many other problems not mentioned .here that are obvious due to the fact that the installations were not designed to stand higher temperatures for what they were designed.

All these problems lead also to prevention costs, so the price of a nowadays thermal solar installation would be more economic if the collector heat supply were under control.

Nowadays there are quite a number of ways to prevent overheating in thermal solar installations. Some of these ways commonly used are:
Cover the collectors manually
Disadvantages: the overheating situation still exists when the collectors are not covered. In case of situate the collectors in roofs the access to the collectors is normally difficult. Cost of the covers.
Incline the collectors more than necessary in order not to have so much heat supply during summer
Disadvantages: Does not avoid the overheating situation in all cases. Decrease the performance of the installation because the collectors are not inclined in optimal angle.
Install fewer collectors than necessary
Disadvantages: Does not avoid the overheating situation in all cases. Low energy supply by the installation when is required.
Install heat dissipation equipments
Disadvantages: Cost of the equipment. Overheating in case of pump failure.
Circulating the water through a pool: Disadvantages: Does not apply to homes without a pool. Unnecessary use of the pump when not using the pool.. Overheating in case of pump failure.
Waste hot water and substitute with cold water: Disadvantages: Unnecessary water consumption. Overheating in case of pump failure.
Empty the working fluid of the collector: Disadvantages: Cost of the installation. Overheating with dry collectors
Other more sophisticated systems that generally lead to costs
Etc

The present invention tries to simplify the problem creating a collector that be able to cut heat supply to the solar installation and, at the same time, be reliable and more economic that any of above methods in order its manufacturing be profitable.

### Explanation

### Models of reflector hold by rings

### Model 1: Single glass vacuum tube with heat pipe

In this section it is described the application of the invention to a vacuum-tube collector of the type of a single glass tube with heat-absorbing fins attached to a heat pipe, and in next sections several easy modifications in order the invention to be applicable to any other type of vacuum-tube collector.

### FIG. 1 & 2

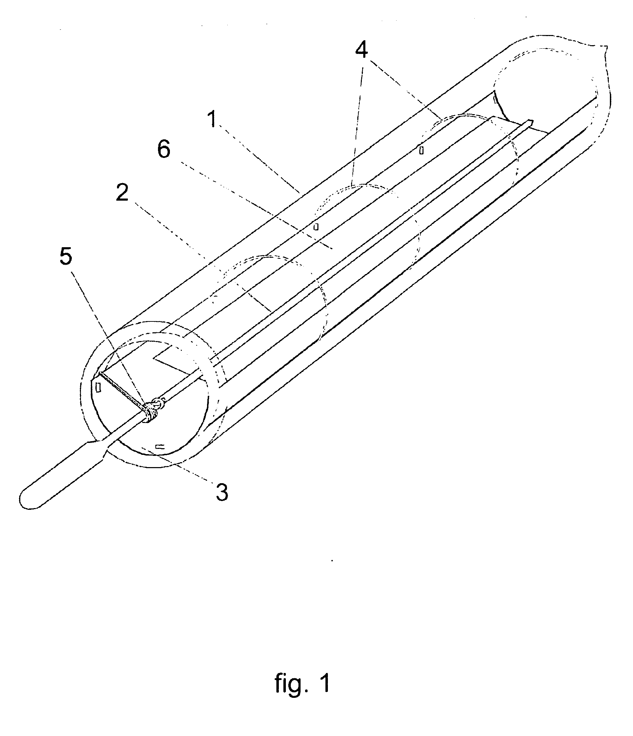

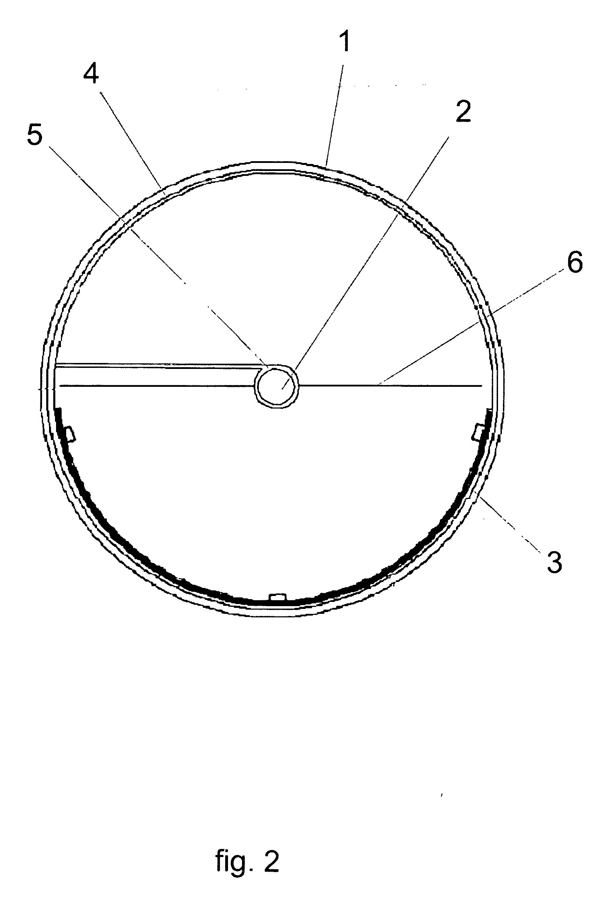

Figures 1 &2 show this type of collector. A single glass tube(1) that has vacuum inside. within the tube there is the heat pipe(2). This heat pipe has attached some fins(6) that has been treated with radiation absorbing material and that transmit heat to the heat pipe(2) by thermal contact.

The present invention introduces a reflector(3), made of aluminum or stainless steel or any other material that can stand temperatures over 200°C, inside of the glass tube(1). The shape of this reflector(3), with small thickness, is approximately semicircular and goes along the glass tube(1) in almost all its length. The main mission of this reflector(3) is to protect the fins(6) from the solar radiation once rotated some degrees within the glass tube(1). The more rotation of the reflector(3) the less absorption of the fins(6), if the rotation angle is 180°, the radiation will not be absorbed at all by the fins(6), therefore the collector will not supply heat to the installation. The secondary mission of this reflector(3), when it is in its lower position without been rotated yet, is to reflect the infrared radiation from the fins or radiation absorbing parts towards themselves, with the aim to avoid thermal losses by radiation, increasing the performance of the collector.

### FIG. 3

The turn of the reflector(3) is driven by a torsion spring(5) of bimetal or nitinol (Nickel-Titanium alloy) or any other alloy that change shape with temperature (here onwards called nitinol spring) that is screwed and with good thermal contact with the heat pipe(2).

Excessive increase in temperature of the heat pipe(2) causes a turn of the nitinol spring(5), due to its shape change with temperature. The nitinol spring(5) can only turn by its long end(8) because the other short end is fixed to the heat pipe(2) by means of a clamp(10) or a pressure ring or welded with the heat pipe(2)

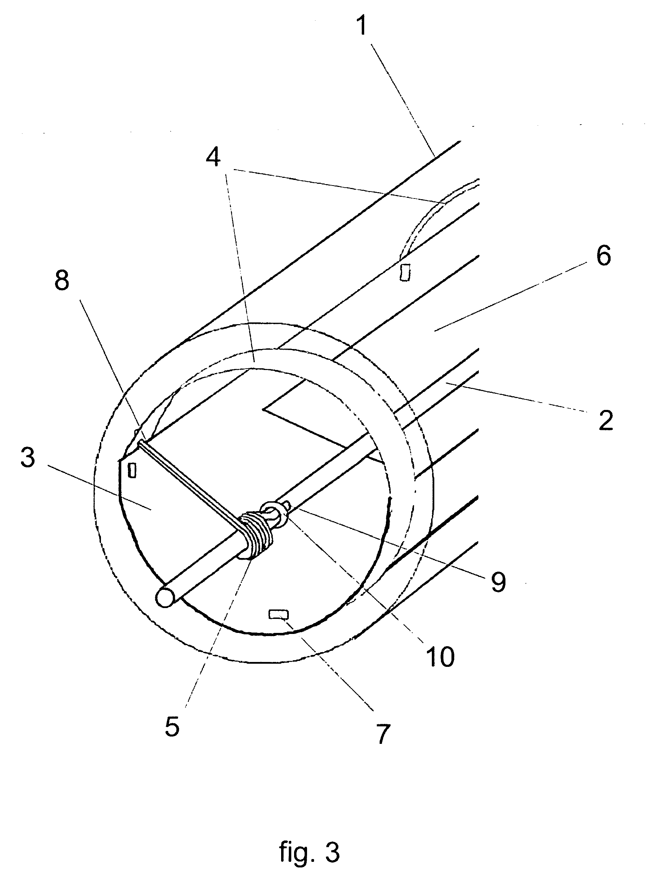

The long end of the nitinol spring(8) is attached to the first ring(4) that, in turn, if fixed to the reflector(3) by means of its three tabs(7), so that the turn of the nitinol spring(5) causes the turn of the reflector(3). The more the reflector(3) turns, the less will be the radiation absorbed by the fins(6), and less will be temperature transmitted to the heat pipe(2). When heat pipe temperature decreases there will be a moment in which the nitinol spring(5) will not turn more and stabilized. This temperature of stabilization will avoid the overheating of the collector. In Figure 3 the nitinol spring has been situated near the end of the vacuum tube, but it can also be situated in other places along the tube, attaching it to any other ring.

### FIG. 4

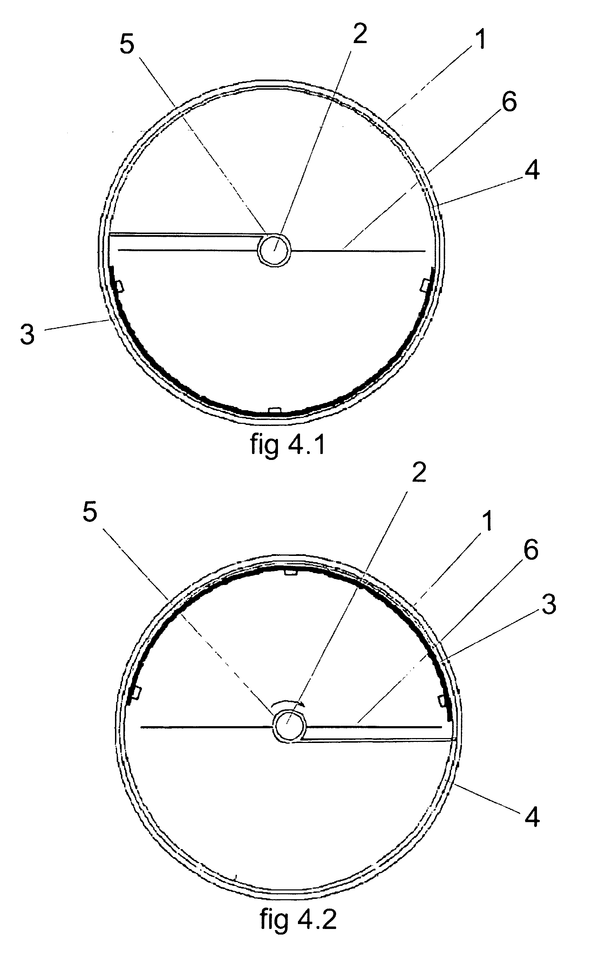

Figure 4.1 shows the reflector(3) when still has not started its rotation, and is positioned in the lower part of the glass tube(1), below the fins(6).

Figure 4.2 shows the reflector after it has turned 180° and situated in its highest position, completely covering the fins from the solar radiation. Although this figure shows a rotated angle of 180° to better understand of the covering of the fins, not necessarily will reach this rotation. The rotation will stop when the heat pipe temperature stabilized.

Because the nitinol spring(5) expands with the rotation, it can minimally lose contact with the heat pipe(2). It is desirable that the nitinol spring is in maximum possible contact with the heat pipe(2), so that the heat pipe transmits its temperature by thermal contact. This maximum contact can be achieved by applying thermal grease between the nitinol spring(5) and the heat pipe(2) in order to increase thermal contact between them. This thermal contact of the spring with the heat pipe is necessary in the single glass vacuum tubes, because the spring is inside the vacuum and there is no heat transfer in vacuum, however it is not necessary this thermal contact in case of double glass vacuum tubes, because inside the inner glass(14) there is air.

### FIG. 5

The reflecto(3) could drop by its own weight when is rotated and make contact with the fins(6). This is not desirable because there would be a thermal lose by conduction from the fins(6) towards the glass tube(1) by means of the thermal contact with the reflector(3). That is why some thin wall rings, made of aluminum, steel or any other material that stands temperatures over 200°C, has been added, fixed to the reflector, for example by means of three tabs(7) that are bended once introduced in the grooves of the reflector(3) provided for it, or by any other method. It should be noted that these rings provide and added advantage, that is to avoid thermal contact between the reflector(3) and the glass tube(1), thereby increasing the radiation of the fins to themselves, and increasing the performance of the collector. The reflector is in the vacuum, very close to the inner wall of the glass tube(1), without actually contact it because between them there are the rings(4).

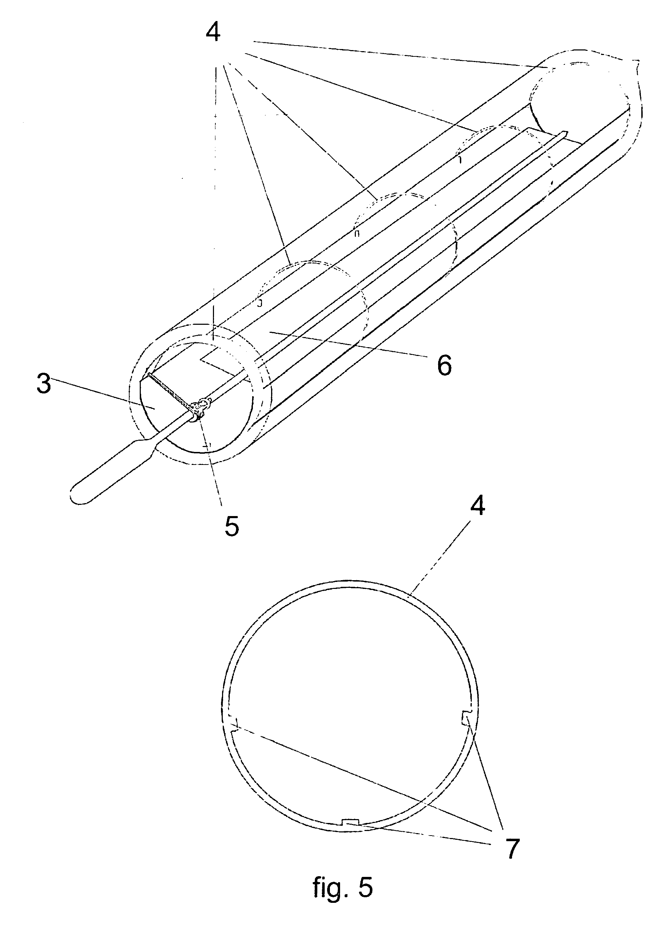

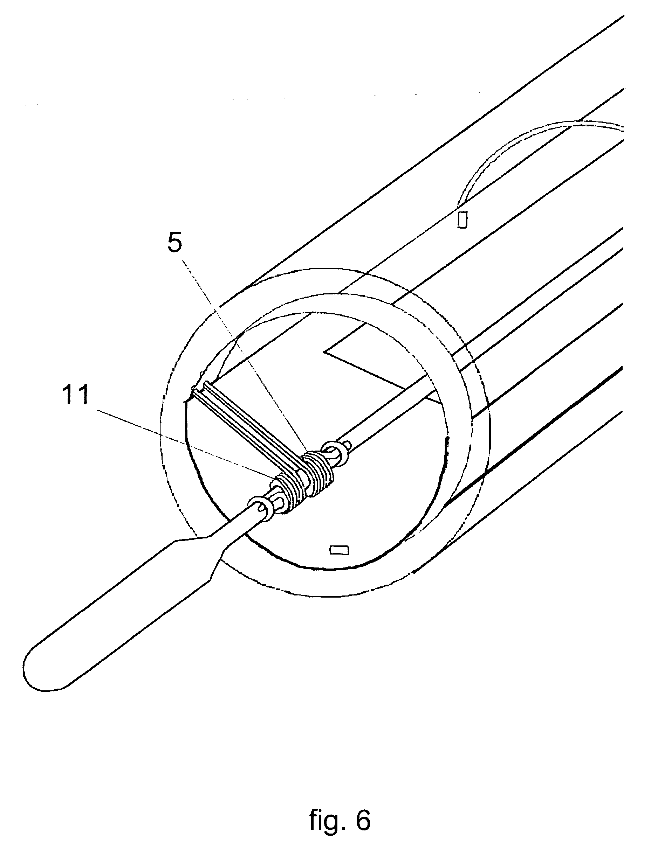

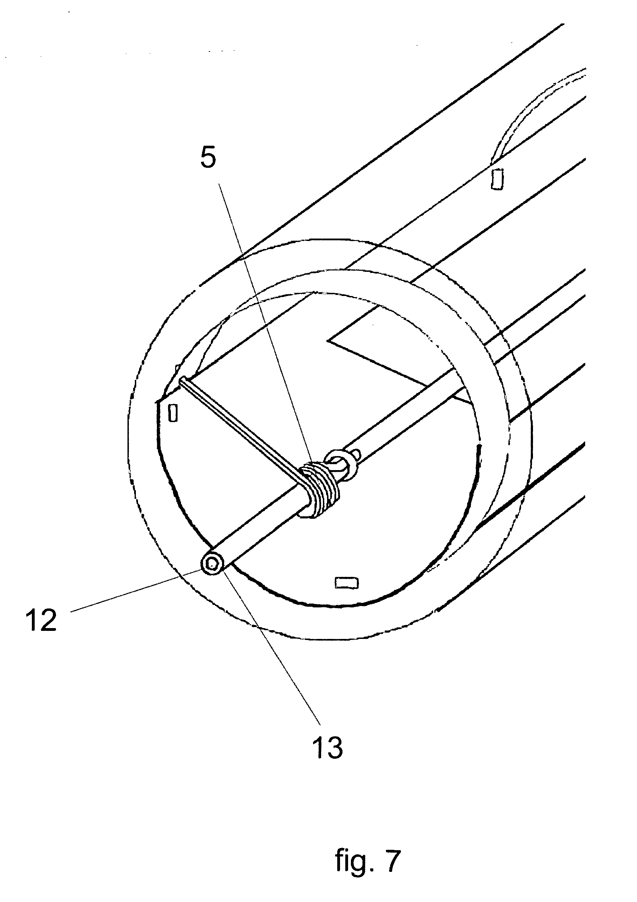

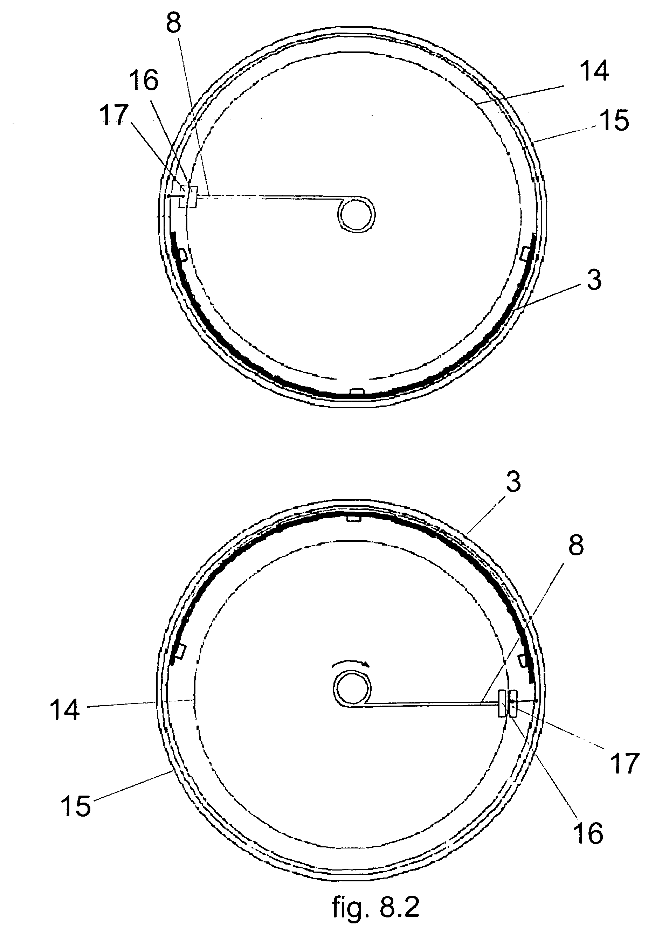

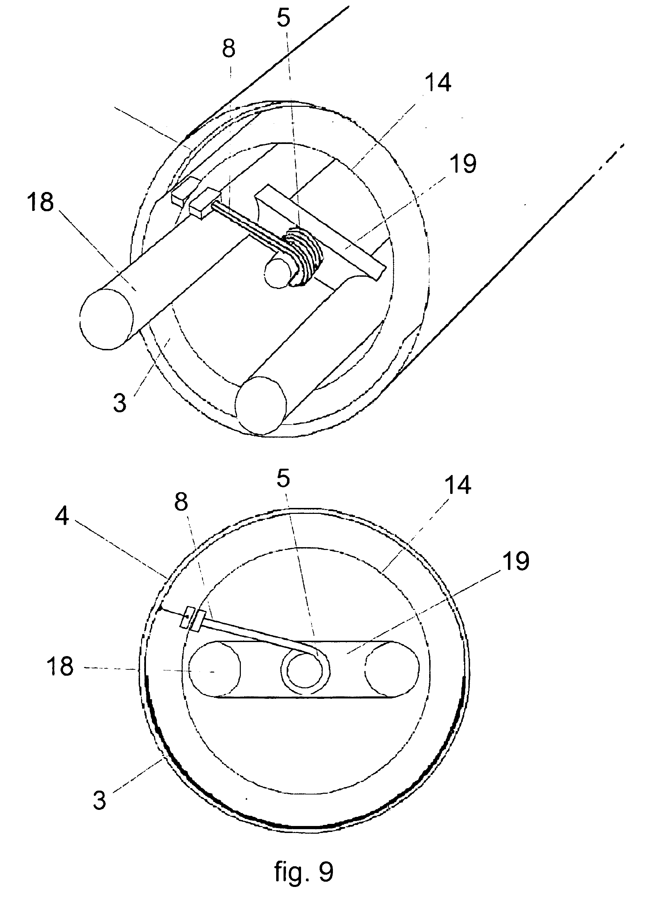

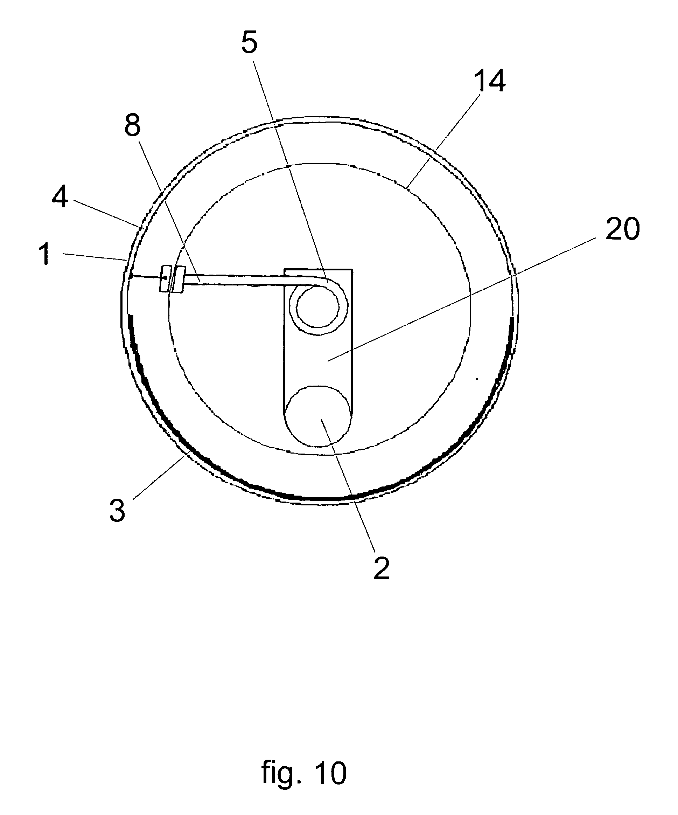

All rings(4) are similar except the one that is attached to the spring (in case of figure 5, the first ring, but could be any other), that should have an special anchor, for example, another fourth tab (not drawn) with a hole through which the long end(8) of the nitinol spring(5) enters and become fixed.

### FIG. 6

If the nitinol spring(5) is of the single memory type, it will turn with the increase in temperature, but will not go back to its initial position after the temperature decreases. To go back it has to be helped by another normal steel spring(11) with an spiral or torsion shape. This steel spring(11) could be situated in any position, even over the nitinol spring(5) and screwed on it. In the figure it has been drawn an steel torsion spring(11) located after the nitinol spring(5).

If the spring is made of bimetal or nitinol with two memory shapes, it is not necessary to add any other steel spring, because these types of springs will go back by themselves to its original position with the decrease in temperature.

The turn of the reflector should be such that doing so in one direction provides correct overheating protection, and in the other way, when it comes to provide heat to the installation, does not cover at all the fins from the solar radiation. That is why the bimetal or nitinol spring must be designed properly, both in form and in degree of torsion with the temperature. Also the reflector arc length should be appropriate, not necessarily 180°, since with smaller arc overheating protection can be achieved. These measures of springs and reflectors depends, in part, the type of tube in question.

### Model 2: Single glass vacuum tube with concentric pipe

### FIG. 7

In this type of vacuum tube there is no heat pipe, instead there is a concentric pipes(12 &13). In one of them the working fluid goes in one direction and in the other in the opposite direction. The nitinol spring should be screwed and fixed to the outer pipe(13). Operation is the same as in model 1.

### Model 3: Double concentric glass vacuum tube with centered heat pipe

### FIG. 8

The reflector(3) is in vacuum and located between the two concentric glass tubes(1 &4), therefore the long end of the nitinol spring(8) cannot be hooked directly to the reflector(3), because there is a glass is in between. To be able to move the reflector(3), the long end of the nitinol spring(8) has fixed a north magnet(16) that attracts another south magnet(17), through the inner concentric glass(14) fixed at one of the rings(4) that holds the reflector(3). The turn of the north magnet(16) makes the south magnet(17) to turn through the glass, and turning the reflector(3). The south magnet(17) can be substituted by an iron part or high iron content part, so that it can be attracted by the north magnet(16).

Since these magnets are submitted to high temperatures and need quite a high magnetic attraction power, they must be neodymium magnets treated to stand high temperatures, or samarium or other kind of magnets.

### Model 4: Double concentric glass vacuum tube with an U shape pipe

### FIG. 9

This type of tube does not have a heat pipe, instead the working fluid flows through an U shape pipe located in the inner glass tube(14) that goes through all its length, making thermal contact with it by means of an aluminum molded sheet (not drawn for this model). A copper or aluminum part(19) is interposed between the two pipes with good thermal contact, welded or fixed by pressure. The nitinol spring(5) in this case is screwed over this part(19). Although the turn of the reflector(3) is limited to something less than 180 degrees, due to the collision of the long end of the nitinol spring(8) with the U shape pipe(18), overheating can be effectively prevented, because it is not necessary to reach a turn of 180 degrees.

Because the tubes are concentric it shall proceed to place magnets as in model 3.

### Model 5: Double concentric glass vacuum tube with an off-center heat pipe

### FIG. 10

This type of tube is the same as in model 3 except that the heat pipe(2) is off-center. The invention is adapted to this type of tube in the same way as in model 4, but the copper or aluminum part is now shorter(20) and is fixed or welded to the heat pipe(2).

### Model 6: Double concentric glass vacuum tube without heat pipe neither pipes inside, with working fluid inside.

Although this type of tubes are commonly used for the well known "thermosiphons", that incorporate the tank horizontally in its top part, with the tubes directly inserted in the tank, can also be used to produce collectors, which are often of low cost because cannot stand much pressure.

The inner part of this kind of tubes is filled with working fluid, transmitting heat by thermosiphon effect. The invention is applicable to this kind of tubes in the same way as in model 3, but with the nitinol spring immersed in the working fluid, so that the excessive temperature increase of the working fluid will make the nitinol spring turning. In this case, since there is no heat pipe to place the nitinol spring over, a part with a central axis (not drawn) will be provided for the invention, made of metal, simple, that can be fixed by pressure to the walls of the inner tube and allows free turn of the nitinol spring.

### Model 7: Double concentric glass vacuum tube without heat pipe neither pipes inside, provided with liquid that actuates as heat transmission when evaporates.

In these tubes there is a small amount of liquid inside the inner tube that evaporates when the tube temperature increases, making the whole tube working as if it were the shaft of a heat pipe. The inner tube is closed at both ends, protruding from the outer tube in its top end, and this protruding part working as if it were the condenser of a heat pipe. The inner tube has usually vacuum inside to control the temperature at which the inside liquid start vaporizing.

The invention is adapted to this type of tube in the same way as in model 6 but with the spring immersed inside the vapor that rises through the tube(14), turning or not depending on the vapor temperature.

### Models with reflector fixed without rings for concentric double glass vacuum tubes

### FIG. 11, 12 & 13

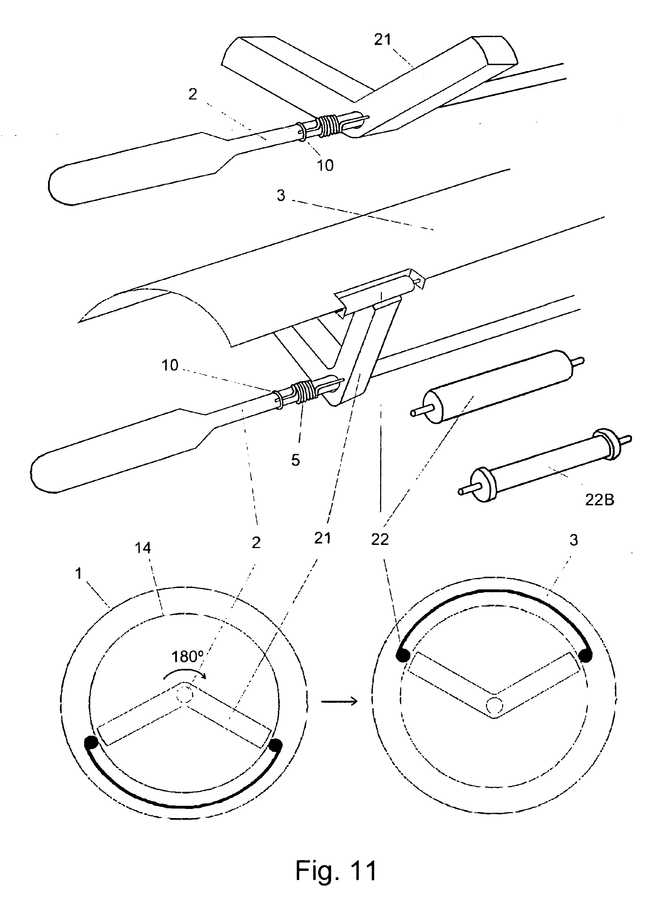

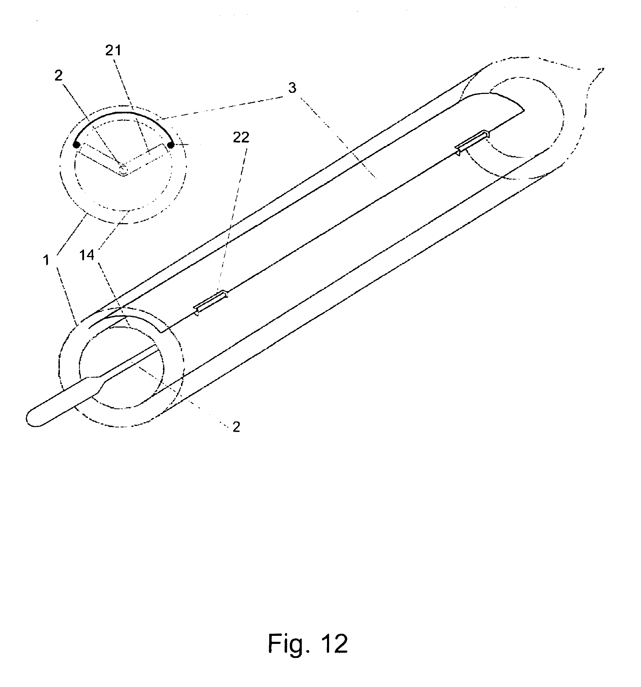

This models are valid for any kind of concentric double glass vacuum tubes. The reflector(3) can be hold without using any ring at all in the following way: The reflector(3) has attached four iron cylinders with tip(22) (iron or any metal with high iron content so that it can be attracted by magnets), two of them at the same height located near the top end of the tube(14) near the header, and two, also at the same height, but near the bottom part of the tube(14). These cylinders(22) are fixed to the reflector(3) so that they can freely rotate by its tips, either cutting, bending and punching the reflector, so that the tips enters freely in the bended parts (like figures 11 & 12), or using metal clamps, not drawn, that accommodates the cylinders(22) and allow them to turn freely. These parts will be fixed by pressure to the reflector(3).

The cylinders are moved by two magnets(21) with a "V" shape, preferably of neodymium, with a hole where the heat pipe(2) is introduced, so that they can freely rotate over it. These magnets are moved by two nitinol springs(5) and fixed to one of its end. In turn, these springs are fixed, at the other end, at the heat pipe(2) by means of pressure rings(10) or welded. The rotation of the nitinol springs causes the rotation of the magnets, that attract the cylinders through the inner tube glass wall and make them rotate. When the cylinders rotate, like if they were a wheel, do so by resting on the outside face of the inner glass tube. The cylinders can be manufactured a little more thin in the central part(22B), with the aim of making the least possible damage to the surface of the inner glass when the cylinders rotate.

The reflector can turn in this way over the inner glass tube without falling down when turning due to the attraction of the magnets with the cylinders.

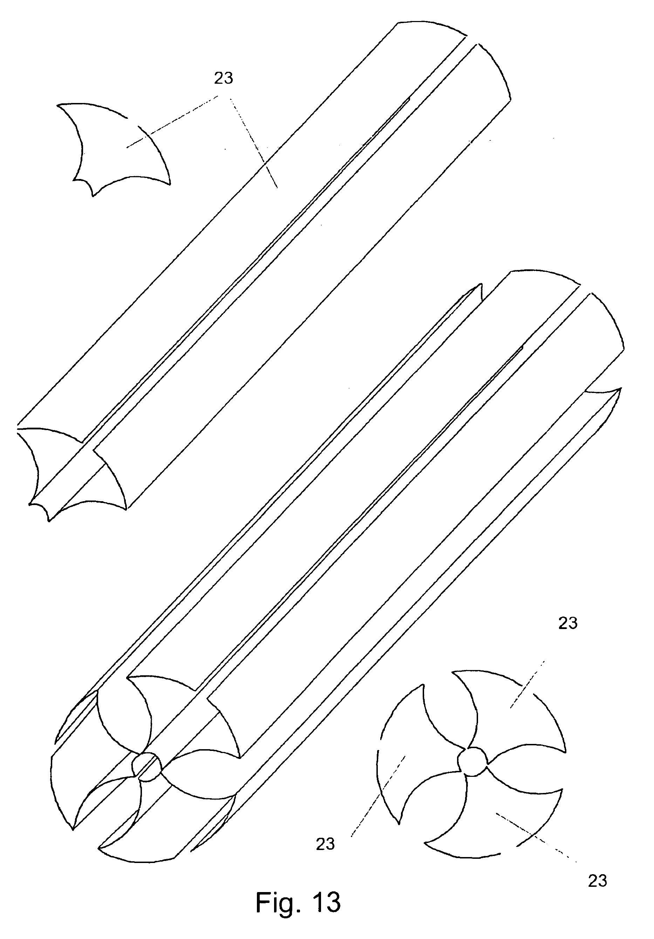

To center the heat pipe on the inner glass tube, three elongated aluminum plates(23), molded according to figure 13, will be added. These plates, also claimed, not only allow to center the heat pipe, but also provides more effective collector performance, due to the simultaneously heat transferring of the heat inside the tube(14) and the heat of the inner tube walls(14) through their six curved radius, improving radiation losses of the inner glass tube because the temperature difference between the inner glass tube and the heat pipe is less.

These plates should be cut longitudinally to such an extent which allows to place between them the nitinol springs and the magnets.

## Claims

1. Solar collector of the type of a single glass vacuum tube(1) that transmits the sun's radiant energy to the working fluid by means of a heat-absorbing fins(6) in contact with a heat pipe(2), **characterized by** it incorporates a curved reflector(3) of small thickness along the glass tube(1), of arc something less or equal to 180 degrees and diameter something less than the inner wall of the inner glass tube(1), hidden from the sun and surrounded by rings(4), and fixed to it by several tabs(7) or by pressure parts, so that it can be rotated inside the glass tube(1) pushed by a bimetal or nitinol (or any other alloy that changes shape with temperature) torsion spring(5) coiled around the heat pipe(2) with good thermal contact and hooked to the reflector(3) by its long end(8) and to the heat pipe(2) by its short end(9) by a clamp(10) or a pressure ring or welded. A temperature rise of the heat pipe(2) rotates the nitinol spring(5) and this, in turn, rotates the reflector(3). This rotation of the reflector(3) cover the absorbing fins(6) from the solar radiation preventing the overheating of the working fluid, and it is reversible in function of the temperature of the heat pipe(2), so that in a normal situation of the collector supplying heat, the reflector(3) returns to its original position below the absorbing fins hidden from the solar radiation, by itself in case of using a bimetal of nitinol spring with two memory shapes, or by means of another steel spring(11) in case of a nitinol spring(5) (or any other alloy that changes shape with temperature) of a single shape memory. In addition to the overheating protection, this invention is intended to increase the collector performance when the reflector(3) is located in its normal lower position of supplying heat, below the fins(6), reflecting the radiation heat loss of the fins(6) towards itself, being optimum the increasing in performance due to the fact that the reflector(3) is not in contact with the glass tube(1), existing a separation, in vacuum, created by the rings(4) interposed between the inner wall of the glass tube(1) and the reflector.

2. Solar collector of the type of a single glass vacuum tube(1) that transmits the sun's radiant energy to the working fluid by means of a heat-absorbing fins(6) in contact with a coaxial pipe(12 and 13) in which circulates the working fluid, in one way through the inner pipe(12) and in the other way through the outer pipe(13) **characterized by** claim 1 except that the bimetal or nitinol spring(5) is coiled and hooked on the outer pipe(13).

3. Solar collector of the type of vacuum tubes consisting of two concentric glass tubes(1 and 14) between which a has been made vacuum, that transmits the sun's radiant energy to the working fluid by means of a heat pipe(2) in thermal contact with the inner glass tube(14) by means of aluminum molded fins(23), **characterized by** claim 1 except that the reflector(3) is located between the two concentric glass tubes(1 and 14), and because the long end of the nitinol spring(8) is neither attached to or pushed directly the reflector(3) to rotate it, but do so indirectly through a north magnet(16) hooked to it, that attracts another south magnet(17), through the inner concentric glass(14), and hooked to the ring(4) that holds the reflector(3). This magnetic attraction of both magnets through the glass allows that the reflector(3), in the vacuum, be rotated, hiding the inner tube(14) from the sun, preventing the overheating of the collector.

4. Solar collector of the type of vacuum tubes consisting of two concentric glass tubes(1 and 14) between which a has been made vacuum, that transmits the sun's radiant energy to the working fluid by means of an "U" shape pipe(18) that runs along the inner glass tube(14) in all its length and contains such fluid, being in thermal contact with such glass tube(14) by means of an aluminum molded fins, **characterized by** claim 3 except that the bimetal or nitinol spring( 5) is coiled and hooked at the central axis of a copper or aluminum part(19) in good thermal contact, secured by pressure or welded with the "U" shape pipe(18).

5. Solar collector of the type of vacuum tubes consisting of two concentric glass tubes(1 and 14) between which a has been made vacuum, that transmits the sun's radiant energy to the working fluid by means of a heat pipe(2) located off center close to the wall of the inner glass tube(14), being in thermal contact with the tube by means of an aluminum molded fins, **characterized by** claim 3 except that the bimetal or nitinol spring(5) is coiled and hooked to the axis of a copper or aluminum part(20), in good thermal contact, secured by pressure or welded with the heat pipe(2).

6. Solar collector of the type of vacuum tubes consisting of two concentric glass tubes(1 and 14) between which a has been made vacuum, that transmits the sun's radiant energy to the working fluid by means of a heat pipe(2) in thermal contact and centered with the inner glass tube(14) by means of an aluminum molded fins, **characterized by** it incorporates a curved reflector(3) of small thickness along the glass tube(1), of arc something less or equal to 180 degrees and diameter something less than the inner wall of the inner glass tube(1), located between the two concentric glasses(1 and 14) and hidden from the sun, and it has attached four cylinders with tips(22) of iron or material with high iron content, which can rotate freely engaged by their ends to the reflector, two of them situated at the same height near the outer end of the tube, and the other two, also at the same height, but near the opposite end, and are moved by the magnet field through the inner glass(14) of two magnets(21) with a "V" shape located at the same height as the cylinders, that in turn are being moved by two nitinol or bimetal (or any other material that changes shape with temperature) spring, coiled to the heat pipe(2), one of its ends secured by clamps(10) or pressure rings or welded to the heat pipe(2) and the other attached to the magnets(21). A temperature rise of the heat pipe(2) or the inside of the glass tube(14) rotates the nitinol springs(5), rotating the magnets and rotating the reflector. This rotation of the reflector(3) hides the inner glass(14) surface from the solar radiation preventing the overheating of the inner tube(14), and is reversible as a function of the temperature of the tube, so that in the reflector normal heat supply condition, the reflector(3) returns to its initial position hidden from the sun, standing below the inner glass tube, by itself in case of using a two memory shape bimetal or nitinol spring, or by means of another normal steel(11) in case of a nitinol spring(5) (or any other material that changes shape with temperature) of a single shape memory.

7. Solar collector of the type of vacuum tubes consisting of two concentric glass tubes(1 and 14) between which has been made a vacuum, that transmits the sun's radiant energy to the working fluid by means of a small amount of liquid inside the inner glass tube(14), that evaporates when temperature increases and ascends through the tube up to its top end, which is in contact with the working fluid, transferring the heat to that fluid by condensation, **characterized by** claim 6 except that nitinol springs and the magnets are secured and rotate freely over the axis of a part hooked by pressure inside the inner tube, immersed in the vapor that ascends through the tube.

8. Solar collector of the type of vacuum tubes consisting of two concentric glass tubes(1 and 14) between which has been made a vacuum, that transmits the sun's radiant energy to the working fluid that is inside it, ascending such fluid by thermosiphon effect, **characterized by** claim 6 except that the nitinol springs and magnets are hold and turn freely over the axis of a part hooked by pressure inside the inner tube, immersed in the working fluid.

9. Solar collector of the type of vacuum tubes consisting of two concentric glass tubes(1 and 14) between which has been made a vacuum, that transmits the sun's radiant energy to the working fluid by means of a heat pipe(2) centered in the tube by means of aluminum fins in contact along the inside of the glass tube(14) characterized because these fins(23) are multiple, three or more, with a radial section, obtaining a better performance of the collector as the heat from the inner glass tube(14) transfers faster towards the heat pipe(2) through the multiple radius of the fins, preventing radiation losses of the tube(14), since its temperature becomes lower. The radius of the aluminum fins(23) could be straight or curved, but is better to be curved, especially if its number is low, six or eight, in order to have separation between them for a better heat absorption inside the inner tube(14).
